Europäisches Patentamt

European Patent Office

Office européen des brevets

(11) Publication number: **0 011 086**
**B1**

(12) **EUROPEAN PATENT SPECIFICATION**

(45) Date of publication of patent specification: **12.01.83**

(21) Application number: **.79102787.3**

(22) Date of filing: **03.08.79**

(51) Int. Cl.³: **G 03 B 17/24, G 03 B 31/06**

(54) **Photographic film unit.**

| | |
|---|---|
| (30) Priority: **04.08.78 US 931060**<br>**04.08.78 US 931061** | (73) Proprietor: **EASTMAN KODAK COMPANY**<br>**343 State Street**<br>**Rochester, New York 14650 (US)** |
| (43) Date of publication of application:<br>**28.05.80 Bulletin 80/11** | (72) Inventor: **Carr, David L.**<br>**Kodak Park**<br>**Rochester, New York (US)**<br>Inventor: **Ballard, Walter L.**<br>**901 Elmgrove Road**<br>**Rochester, New York (US)** |
| (45) Publication of the grant of the patent:<br>**12.01.83 Bulletin 83/2** | |
| (84) Designated Contracting States:<br>**BE DE FR GB IT** | (74) Representative: **Blickle, K. Werner, Dipl.-Ing. et al,**<br>**KODAK AKTIENGESELLSCHAFT Postfach 369**<br>**D-7000 Stuttgart 60 (DE)** |
| (56) References cited:<br>**US - A - 3 644 032**<br>**US - A - 4 043 651**<br>**US - A - 4 102 569** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Photographic Film Unit

The invention relates to a photographic film unit intended to be exposed in a still camera and subsequently processed, the film unit including a disc of unexposed photosensitive material having image areas disposed in an annular region around an axis, the disc being rotatable around such axis by a camera to present the image areas one at a time for exposure.

In U.S. Patent Specification No. 2,531,652 there is described and illustrated a film unit which consists of a disc of photosensitive film rotatable about a central axis for receiving a plurality of images in an annular region concentric with said axis. That film unit has to be loaded into a camera in darkness because no cartridge, magazine or other form of housing is provided.

The need exists to record information in fixed relation to photographic film at various times throughout the life of the film in such a manner that it can be recovered at a later time in the film's life. For example, it may be desired to record information such as the film speed, whether the film is black and white or color, the designation of the appropriate process for developing the film and the emulsion number, before the film is marketed. It may be useful for some of that information (for example film speed) to be retrieved in the camera in order to set the exposure controls of the camera. When a photograph is taken it may be desirable to record information about the image, for example whether or not flash was used, and what was the nature of the ambient lighting, e.g. was it natural or incandescent or fluorescent. When a film is given to a dealer for processing, the dealer may wish to record information in relation to his business, so that the processor returns the film to the right dealer, and in relation to the customer, and in relation to the nature and number of the prints required of each latent image. The processor might also want to record information, for example in relation to the dealer and the nature and number of the prints desired, and perhaps also in relation to the exposure used for each print. The processor wants to use much of the above mentioned information, for example process designation, when processing, and flash/no flash and lighting information and nature and number of prints required, when printing. When assembling the prints and film for return to the dealer he will want the dealer and customer information. Part of this information recording and retrieving cycle may be repeated later if a reorder of prints from existing negatives is made.

The film unit disclosed in U.S. Patent Specification No. 2,531,652 does not provide in addition to the photosensitive recording medium, a recording medium to which information may be added and from which information may be retrieved throughout the life of the film.

The present invention overcomes the above mentioned disadvantage of the prior art by an opaque core including a particulate magnetic recording material dispersed in a plastic material and secured in a central aperture in the disc. The magnetic material may be added to the plastic material during manufacturing at a negligible cost. It provides a recording medium to which information may be added and from which information may be retrieved throughout the life of the film unit.

Because the magnetic recording material is associated with the core and because the core is formed of opaque material the film unit can be disposed within a cartridge housing with a large region of the core exposed, the magnetic recording material is contactible by magnetic recording and reading heads even though the photosensitive region is in a cartridge housing. Such a film unit is suitable for loading into a camera in daylight.

Thus, in accordance with the invention, information may be recorded on the film unit when in its cartridge housing, before it leaves the film factory, whilst in a camera, at the photo dealer's store when it is being returned for processing, and at the photo-finisher's even before it goes into a darkroom to be taken from its cartridge housing. Of course, the record stays with the film unit after the cartridge housing is taken away from the film unit and is thus available for use in processing and printing.

Furthermore, after the cartridge housing is taken away, additional information may be recorded on a region of the core, a portion or all of which region may not have been directly contactible from the exterior of the housing prior to removal of the housing.

The invention also has the advantage that the magnetic recording material is not overlying photosensitive material, which, because it contains silver, is expensive. If it were on the photosensitive material then a special window through the cartridge housing would have to be provided and would have to be made coverable to render the cartridge light tight when not in a camera. Alternatively the exposure window in the cartridge housing would have to be enlarged. However, it is desirable to keep the magnetic recording material away from the exposure window to avoid problems with location of the film plane during exposure.

Embodiments of the invention will now be described by way of example, with reference to the accompanying drawings, wherein:

Figures 1 and 2 illustrate a presently preferred embodiment of the invention;

Figure 3 is a process flow diagram illustrating the steps of manufacturing, exposure, processing, and printing a film unit in accordance with the invention;

Figure 4 is a schematic diagram of a film unit in accordance with the invention showing its use with recording apparatus in a camera;

Figure 5 is a schematic diagram of a film unit in accordance with the invention showing its use with a photographic printer; and

Figure 6 is a plan view of one face of a cartridge embodying a film unit similar to that illustrated in Figures 1 and 2, with part of the cartridge housing broken away for the sake of illustration.

Because a photographic film product in general is well known, as is its use with cameras and photographic processors and printers, the present description will be directed in particular to elements forming part of, or cooperating more directly with elements of, the present invention. Elements not specifically shown or described may take various forms well known to those skilled in the art. In particular, any photographic component, i.e., photosensitive layers, film support, etc., is understood to be selectable from any of numerous well-known components.

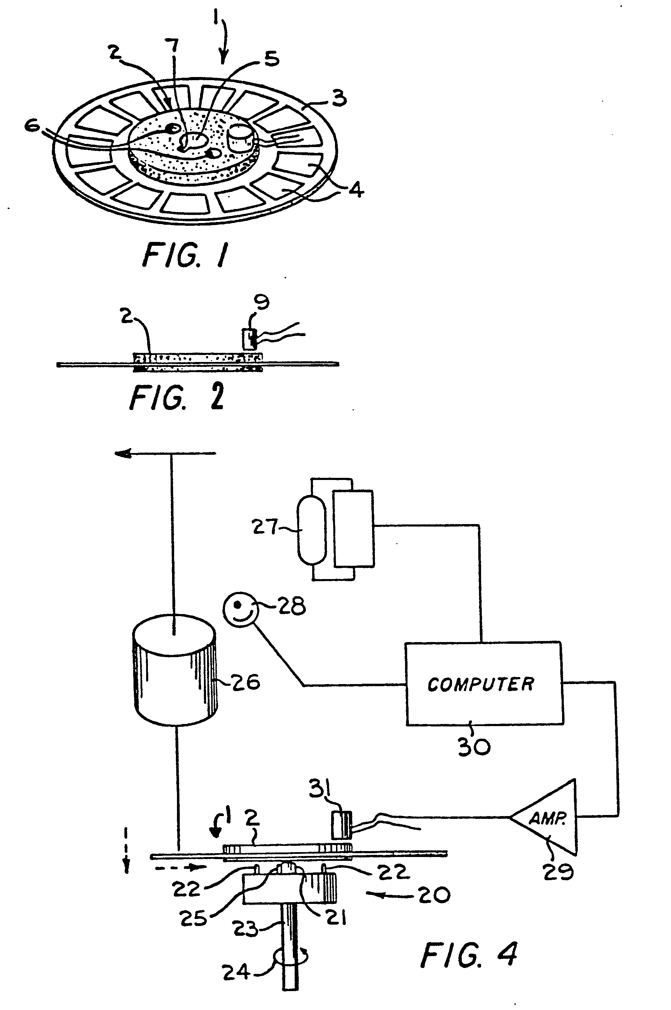

Referring initially to Figures 1 and 2, a first embodiment of the invention is shown. A film unit 1 includes a core 2 and a film disk 3 supported by the core 2. The core 2 is a structural support for the film disc 3 and is formed of a rigid material, for example, a plastics material, such as, polystyrene. The film disk includes an annular photosensitive image area located outwardly from the perimeter of the core 2, for receiving a plurality of separate image frames 4. The core 2 includes a spindle aperture 5 and a pair of positioning holes 6 spaced outwardly from the splindle aperture 5 on opposite sides thereof. A spindle keyway 7 is formed in the aperture 5. The spindle aperture 5 and the positioning holes 6 together cooperate with rotary apparatus (later described) for moving the film unit 1. The keyway 7 assists in assuring one-way positioning of the film unit 1 on the apparatus.

The core 2 is provided with a magnetic region by dispersing magentic particulates in the plastics core 2. The magnetic particulate may be various particulate, ferromagnetic or ferrimagnetic materials, such as gamma ferric oxides (doped or not doped), ferrousferric oxides, chromium dioxide, ferricferrites, etc. A conventional iron oxide is exemplary of the type of magnetic particulate that may be used in the practice of this invention. Brown iron oxide ($\gamma Fe_2O_3$) has been found adequate in providing the light lock protection needed in photographic applications. In cases where black materials are essential, a cubic black iron oxide ($Fe_3O_4$) may be used.

Preferably, the particulate is dispersed in the plastic material used to manufacture the core 2. The dispersion may be accomplished in numerous concentrations by conventional processes. For example, a dispersion of conventional iron oxide powder in a conventional rubber-modified impact grade polystyrene binder was prepared in suitable mixing apparatus according to the following proportions by weight:

| Material | Parts by Weight |
| --- | --- |
| iron oxide | 5 |
| polystyrene | 95 |

The proportion by weight is exemplary of a suitable dispersion; other dispersions were prepared including oxide-to-binder ratios by weight ranging from 1:1 to 1:100. The mixing apparatus may be selected from various conventional apparatus, for example, a batch-type mixer or a compounding (twin-screw) extruder. Whatever the apparatus, the resultant oxide-impregnated binder is conventionally pelletized. The pelletized magnetic oxide-polystyrene mixture is subsequently fed to conventional injection molding apparatus for producing the core 2. With the iron oxide particulate dispersed in the core material, the core 2 becomes a recording medium on which various data can be magnetically recorded and indefinitely stored (or selectively erased).

It has been found that $\gamma Fe_2O_3$ particulate in the amount usable without detracting from the physical strength of a core formed of polystyrene or other low grade plastics material, provides adequate opacity to the core. $\gamma Fe_2O_3$ is brown. If it is desired that the core be black, fine ground carbon may be added to the mixture of polystyrene and $\gamma Fe_2O_3$ from which the core is formed. $Fe_3O_4$ is black and likewise provides adequate opacity in the amounts usable without adversely affecting physical strength of the core. Both of these oxides are easier to mix than is fined ground carbon hence an additional advantage is achieved if the carbon is omitted and the oxide provides the opacity.

As shown by Figure 2, a magnetic head 9 may be brought adjacent or in contact with the core 2 to record and/or reproduce the data during rotation of the core relative to the head.

It will be apparent from Figure 2 that magnetic particulate throughout the core 2 may be unnecessary, and particulate only in the regions of areas adjacent the path of the magnetic head 9 will be sufficient. Similarly, depending upon the concentration of the particulate, e.g. iron oxide particles, it may be satisfactory to spread iron oxide particles only in a surface layer of the core 2.

The encoding characteristics of the oxide-impregnated core have been observed to depend upon the thickness of the core. The signal to noise ratio of the recording increases as the recorded wavelength approaches the thickness of the core. It is believed that larger wavelengths involve a greater thickness (and therefore utilize a greater volume of oxide) than shorter wavelengths. In terms of encoding capability, a bit packing density of close to 40 bits/cm was empirically observed at a signal-to-noise ratio of 28.2 db with conventional measuring equipment. For these tests, the material included a 5% concentration by weight of iron oxide particles in a core of about 1.0 mm thickness. A signal was employed of about 0.2 mm wavelength to record an arcuate track on the core. The recording frequency is related to the rotational velocity of the hub during recording.

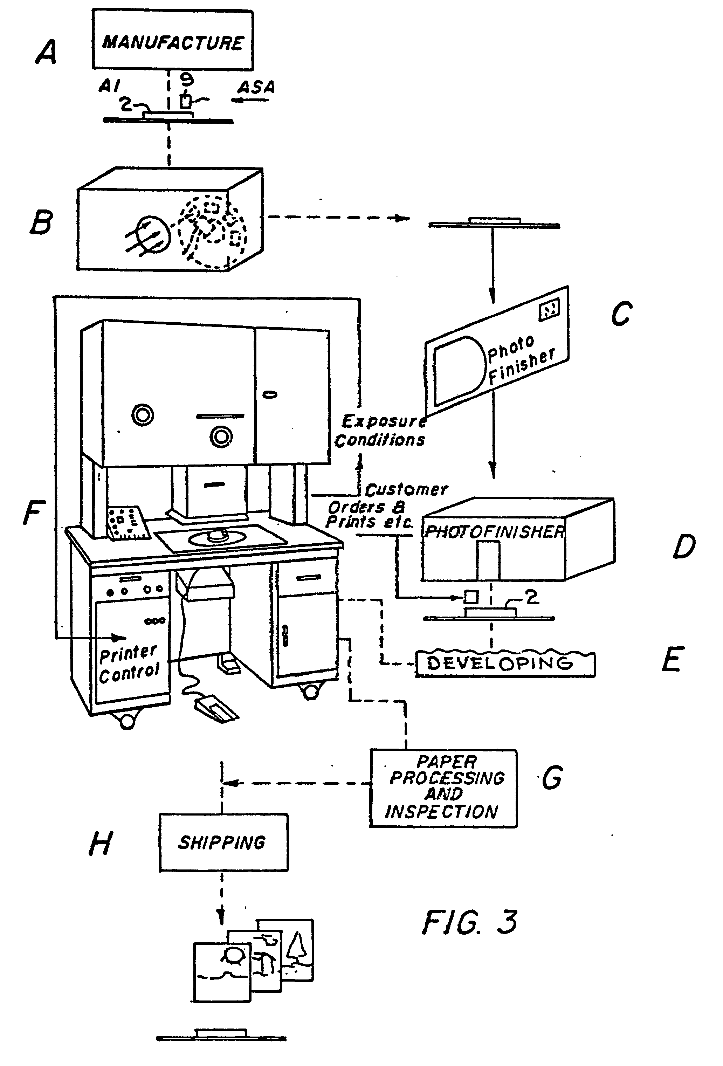

Since the magnetic recording and photographic media are combined in one unit, it is feasible for magnetically recorded data to accompany corresponding photographic information throughout various photographic operations. Figure 3 illustrates the steps of a typical photographic process from manufacture of the film unit to delivery of the print to the customer's hand. Importantly, data pertaining to the film product can be carried throughout the process on the film unit and, when desired, oriented with respect to respective image frames.

The product is initially formed at the manufacturing stage A. Several procedures are possible. The film unit 1 is manufactured in accordance with Figure 1, in which iron oxide particles are incorporated into the core 2, this possibility being shown schematically in Figure 3.

At the manufacturing step A, certain film information can be recorded on the core 2 which is impregnated with magnetic oxide particles. Such information may include, but is not limited to, ASA film speed, film type (indoor/outdoor), color or black/white, film expiration date, exposure latitude, emulsion number, process code, etc. The manufacturer may also record a unique identification number on the film unit. This information may be used for control by the photofinisher, as well as the manufacturer, e.g., for sorting and verifying that similar film types or emulsions are handled in a similar manner.

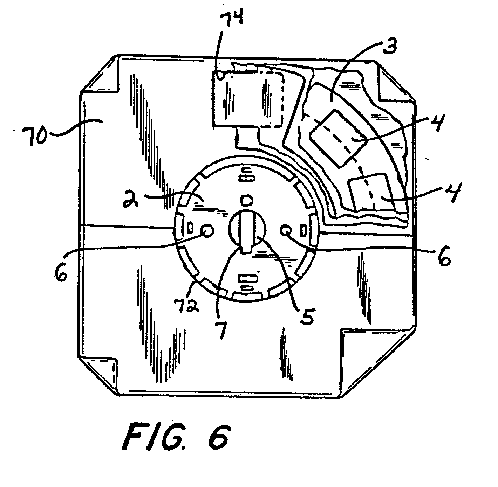

A film unit similar to that of Figures 1 and 2 is incorporated into a cartridge assembly illustrated in Figure 6. As can be seen in Figure 6 the cartridge includes a housing 70 which envelops the photosensitive region of the film unit. The housing 70 has an aperture 72 the periphery of which cooperates with the core 2 to form a light seal. The film unit can be rotated relative to the housing to bring successive image frames 4 into alignment with an exposure window 74 in the cartridge housing. The cartridge is preferably provided with means for closing the window so that light does not enter the cartridge when the cartridge is out of the camera. As can be seen in Figure 6 a large region of the core 2 is exposed to the exterior of the cartridge so that it is contactible by a magnetic head.

For a full description of a cartridge assembly suitable for incorporating a film unit in accordance with the present invention reference may be made to DE OS 28 09 780 or European Patent Application 79 102 786.

The film unit is sold incorporated in a cartridge. The customer-user places the cartridge in a camera at step B and exposes each frame 4. A magnetic head in the camera potentially serves two functions: first, it can retrieve film related information — such as ASA film speed, film type, film latitude, etc, — and provide the information to the camera's exposure control system for use in adjusting or operating the aperture, shutter, and flash lighting devices of the camera. Secondly, the magnetic head can record pertinent exposure information helpful at later stages of the photographic system, such as the character and type of lighting employed.

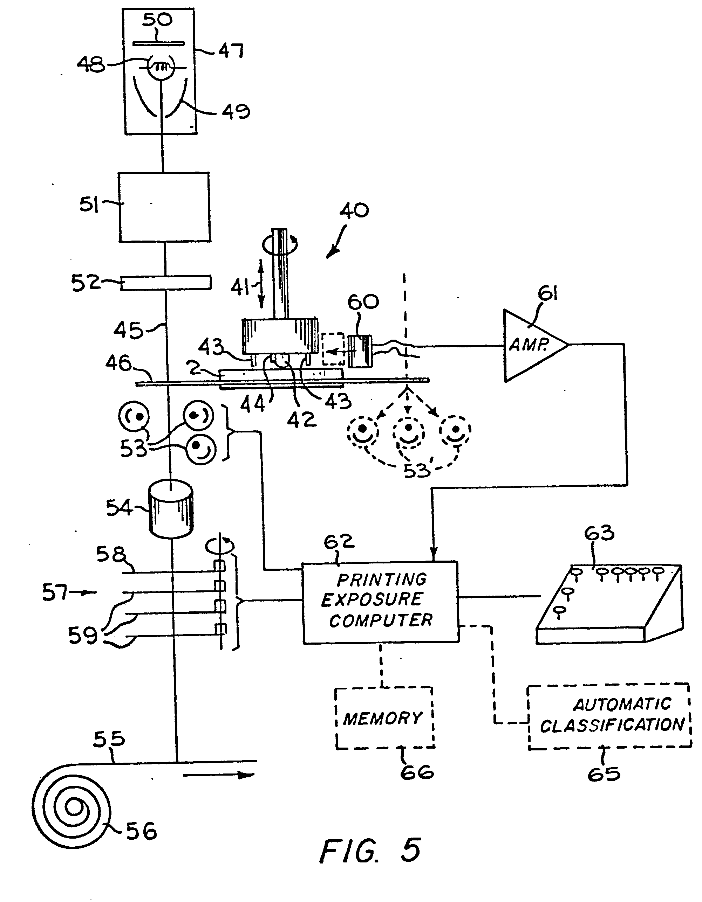

As illustrated in and described with respect to Figure 4, the film unit 1 is mounted within the camera for rotation by engagement with a rotor assembly 20. The assembly 20 includes a spindle 21, for mating with the spindle aperture 5 in the core 2, and a pair of positioning pins 22, for mating with the positioning holes 6, also in the core 2. The rotor assembly 20 is mounted upon a shaft 23 which is driven in increments of rotation in a direction indicated by an arrow 24. The film unit 1 seats upon the rotor assembly 20 so that the spindle 21 and the pins 22 engage the corresponding aperture 5 and holes 6, respectively, in the core 2. A key 25 is also provided on the spindle 21 for mating with the spindle keyway 7 to assure one-way positioning of the film unit 1. The camera includes a lens 26, a flash lamp 27, and a photocell assembly 28, comprising one or more individual photocells. A magnetic record/playback head 31 is positioned in contact with the core 2 for reading and recording information. A computer 30 provides an appropriate signal for recording on the core 2, depending upon input signals from the flash lamp 27, or the photocell 28, which are each connected to the computer 30. The recording signal from the computer 30 is amplified to a usable level by an amplifier 29 and provided to the head 31 for recording on the core 2. Where playback is also provided from the core 2, the playback signal — being relatively weak — is amplified by the amplifier 29 and provided to the computer 30. There the playback signal may be used by the camera's electronic system, e.g., if the signal represents film speed, it may be used to affect exposure determination. Figure 4 is a schematic representation of basic components for recording and/or reproducing information on the film unit 1.

The film unit 1, in its cartridge assembly, is then removed from the camera at Step C, in Fig. 3, and delivered to the photofinisher by customary means — either by mail or through a dealer. If through a dealer, the dealer could record his unique identifying number upon the core 2, thereby assisting in order control at the photofinishing plant. At the photofinishing plant, the film unit 1 proceeds through a receiving operation D, where the film is sorted for size and type. Certain information pertaining to the customer, such as customer order number, number of prints desired, print sizes, etc, are possible entries upon the magnetic core 2. The film unit, having been removed from its cartridge assembly, is then developed at E to form visible images. The developed film unit then goes to the printer F.

Printing generally proceeds automatically, either the negative being prescanned for appropriate exposure correction or the printing light being measured during printing, to control an arrangement of cutoff filters. Nonetheless, it has been found helpful if the printer is forewarned of certain conditions. The exposure having been by flash is one such condition. The number of prints is another condition, useful primarily on reprint orders. Therefore, the printer includes a reading head for reading the magnetic record on the core 2 and retrieving information on the exposure conditions recorded at stage B in Fig. 3. The printer's exposure control system is appropriately modified in accordance with the retrieved information. If the print size is recorded on the core 2, a printer having capability for making more than one print size may be automatically controlled. With the image frame 4 remaining in the printing gate, the print size is automatically read from the core 2 and the printer is accordingly controlled to make the desired prints. On the other hand, if a plurality of printers each capable of producing a different size of print, are employed, the print size data recorded on the core 2 may be used to route the film unit between appropriate different printers.

Information recorded on the core 2 is disposed for use by a photographic printer schematically illustrated in Figure 5. A rotor assembly 40, similar to the rotor assembly 20 described in connection with Figure 4, is mounted also for axial displacement, as indicated by an arrow 41, so as to descend and seat upon the core 2 of the film unit 1. A spindle 42, and positioning pins 43, extend from the assembly 40 to engage with the spindle aperture 5 and positioning holes 6, respectively, of the core 2. A key 44 on the spindle 42 mates with the keyway 7 and thereby provides one-way positioning. The film unit is so positioned that particular image frames 4 line up successively along the optical axis 45 and in the printing gate aperture 46 of the printer. Printing light is generated within an illumination assembly 47 which includes a lamp 48 and an ellipsoidal reflector 49. A "cold" mirror 50 transmits heat radiation out the back of the illumination assembly 47 and reflects useful white light through an aperture in the ellipsoidal reflector 49.

A light integrator 51 concentrates and scrambles the light for the particular size image frame 4 being used. The printing light is further modified by a diffuser 52 to reduce the effect of scratches on the image frames 4. The printing light then traverses the image frame, where it is modified according to scene content. Red, green and blue phototubes 53 measure the red, green and blue content of the image light so modified by the image frame 4. A printing lens 54 gathers the light and focuses the light toward an image plane on the surface of the photographic paper 55. The paper 55 is mounted for incremental advancement from a supply roll 56 for sequential exposures to image light from successive image frames 4.

Interposed between the lens 54 and the paper 55 is a shutter/filter assembly 57 for controlling the light. A dark shutter 58 is adapted for movement out of the path of the printing light to start the image exposure. Cyan, magenta, and yellow filters 59 enter the light beam according to measurements derived from the phototubes 53 to control, respectively, the red, green and blue exposures for the image frame 4. The dark shutter 58 is further adapted to enter the printing beam to terminate the exposure.

A magnetic head 60 is positioned in contact with the core 2 for reproducing information recorded on the core. The head 60 is connected to an amplifier 61, which in turn is connected to a printing exposure computer 62. A classification keyboard 63 is also connected to the computer 62. The computer 62 is further connected to the phototubes 53 and the shutter/filter assembly 57.

Finally, the paper exposed during the printing step F (Fig. 3), is taken through paper processing and inspection step G. The finished order of prints and the film unit 1 are combined and packaged at step H for shipping back to the customer.

The operation of the information recording feature on the film unit 1 will now be described in connection with use of the information during printing. Information may be recorded at numerous steps illustrated by the process flow diagram of Figure 3. The head 9 is positioned in contact with the surface of core 2. If the information to be recorded is in the form of a single bit, i.e., the simple existence or non-existence of a condition, the head 9 may be energized and the iron oxide particulate in the core 2 will be accordingly magnetized. Relative movement between the core 2 and the head 9 is unnecessary. However, if a series of bits must be recorded, i.e., representative of more complex data, then it is advantageous to move the core 2 with respect to the head 9, or vice versa. In most record/playback situations, there is an ancillary need to move the core, e.g. for purposes of moving between exposures and between images during printing.

The rotor assembly 20 in Figure 4 is illustrative of means for rotating the film unit 1. There the film unit 1 seats upon the rotor assembly 20, engaging the spindle 21 and the positioning pins 22. Precise orientation is assured by the key 25. When a photograph is taken, either flash or ambient light will be used. If ambient, the light would typically be daylight, fluorescent-light, or tungsten-light. The photocell assembly 28 provides a signal to the computer 30 for discriminating among the forms of ambient light, e.g., by wavelength, while the energization of the flashlamp 27 is controlled, and noted, by the computer 30. Taking simply "flash or no flash" as a useful piece of data for the printer, the computer 30 directly recognizes whether or not flash has been used since the computer causes energization of the flash 27. If used, the computer energizes the head 31. Lines of magnetic force penetrate the core 2 and accordingly vary the magnetization of the iron oxide particles. A bit of magnetic data is then left indicating that a flash lamp was used in illuminating the subject. Conversely, the lack of the magnetic bit indicates a flash was not used.

Additional information may be entered in previously unused areas on the core 2 by the photo-finisher. Particularly in the case of reprints, where a customer is asking for additional prints from specific image frames, the number of prints can be entered on the magnetically active region of the core 2. A rotor assembly, such as assembly 20 described in connection with the camera, is suitable for moving the core 2 past a magnetic head for recording quantity opposite each image frame 4.

When the film unit 1, now with flash/no flash indication, is printed with apparatus illustrated in Figure 5, it is first placed so that the film disk 3 is adjacent the printing gate aperture 46. The printer's rotor assembly 40 seats upon the core 2 and precisely positions the film unit 1 via cooperation between the spindle 42 and the positioning pins 43, and the spindle aperture 5 and the positioning holes 6, respectively. The head 60 is positioned in contact with the core 2 so as to sense magnetization of the iron oxide particles corresponding to each image frame.

As the rotor assembly 40 rotates the core 2 to position another frame in the printing gate aperture 46, the head 60 senses the presence of magnetization in the iron oxide particles. The signal caused by the sensing is amplified to usable magnitude by the amplifier 61 and passed to the computer 62. Meanwhile, the operator has visually examined the frame and has entered color and/or density correction by means of the classification keyboard 63. The dark shutter 58 opens, permitting exposure to begin. Now the red, green and blue phototubes 53 begin to monitor the image light. As this occurs, the computer 62 senses the flash/no flash indication from the amplifier 61 and combines this data with the classification entries from the keyboard 63. Each phototube 53 then integrates the scene light to a value determined by the computer 62 in view of operator classification and data reproduced from the core 2 (i.e., the existence of flash

lighting). The computer has also sensed the quantity indication and causes the required number of prints to be made.

Although the operation of an embodiment of the invention has been described in connection with a printer under operator control, a similar description applies to a totally automated printer, i.e., one in which all exposure determinations are made by the printer. Typically, the negative is scanned prior to arriving at the printing gate aperture 46. Scan data would be combined with core-derived data, such as flash/no flash indication, to classify the image frame as to scene type so as to select a proper exposure determination algorithm. The algorithm then calculates the various filter times and controls mechanical apparatus for bringing the filters into the exposing beam at appropriate times.

In such an automated printer, the phototubes — shown in phantom by reference character 53' in Figure 5, and generally representative of scanning apparatus — would be placed upstream of the printing gate aperture 46 so as to scan image frames before they arrive at the printing gate aperture. An automatic classification device 65 is employed instead of operator input through the classification keyboard 63. Now, without the aid of an experienced operator, the core-derived data becomes effective in making a shortcut determination of scene type. For example, flash-lighted scenes typically have a high density in the central area of the negative. For the purpose of discrimination, this knowledge may be insufficient because some daylight scenes also have high density central areas. To a scanner these scenes may be identical — though noticeably different to a critical observer. But with flash/no flash data on the hub, the printer is assured of proper discrimination between these scenes.

In cases in which the photofinisher is the initial user of the magnetic media on the film unit, a fixed association between the image frames on the film unit and specific areas on the magnetic media may be unnecessary. The magnetic region on the core 2 may be used as a recording element conveniently anchored to the film disk 3 as a whole, rather than to the image frames 4 specifically. Customer information — such as order number, special instructions, etc, — can be serially recorded on the core 2 without reference to specific frames. Especially in the case of reprints, where a customer has returned a film unit for additional prints, the photofinisher may enter for each frame, the frame number and the quantity of prints from that frame. The association of the data to a frame is thereby maintained in the data recorded on the core 2 rather than by physical association between the position of the data and a given image frame.

In the case of data not related by position to the frames, it is desirable to prescan the core 2 for pertinent data before printing the first frame.

Referring to Figure 5, this may be accomplished if the rotor assembly 40 first spins the film unit 1 one revolution so that the head 60 can pick off all order-related data. Such data will need to be stored in an electronic memory for later recall by the printing computer 62 (such as memory 66 shown in phantom in Figure 5).

Rather than being of relatively high level capability, the encoding characteristic of the specific embodiment may be quite basic if the information stored is itself basic. For example, the head 31 in the camera (Figure 4) may be a low fidelity write-only head or simply an electromagnet that is energized directly by the flash circuit that energizes the flashlamp 27. For such basic two-state information as flash or no-flash, it is feasible to merely energize the head and leave a gross discontinuity in the magnetic domain of the magnetic oxide material.

## Claims

1. A photographic film unit intended to be exposed in a still camera and subsequently processed, the film unit including a disc (3) of unexposed photosensitive material having image areas (4) disposed in an annular region around an axis, the disc being rotatable around such axis by a camera to present the image areas one at a time for exposure, characterized in that an opaque core (2) including a particulate magnetic recording material dispersed in a plastic material is secured in a central aperture in the disc (3).

2. A photographic film unit according to Claim 1, characterized in·that the particulate material is dispersed throughout the core (2).

3. A photographic film unit according to Claim 1 or 2, characterized in that the plastic material is polystyrene.

4. A photographic film unit according to Claim 1, 2 or 3, characterized in that the particulate material is $Fe_2O_3$ which provides opacity of the core.

5. A photographic film unit according to Claim 4, characterized in that the core (2) includes carbon to provide additional opacity.

6. A photographic film unit according to Claim 1, 2 or 3, characterized in that the particulate material is $Fe_3O_4$ which provides the opacity of the core.

## Patentansprüche

1. Photographische Filmeinheit, die für die Belichtung in einer Stehbildkamera und eine nachfolgende Entwicklung vorgesehen ist, mit einer Scheibe (3) aus unbelichtetem lichtempfindlichem Material, auf der in einem ringförmigen Bereich um eine Achse herum Bildfelder (4) angeordnet sind, wobei die Scheibe von einer Kamera um diese Achse drehbar ist, so daß die Bildfelder jeweils einzeln in eine Belichtungsstellung gebracht werden, dadurch gekennzeichnet, daß ein lichtundurchlässiger Kern (2), der ein in einem Kunststoffmaterial dispergiertes teilchenförmiges magnetisches Aufzeichnungsmaterial aufweist, in einer in der Scheibe (3) vorgesehenen zentralen Öffnung befestigt ist.

2. Photographische Filmeinheit nach Anspruch 1, dadurch gekennzeichnet, daß das teilchenförmige Material im ganzen Kern (2) dispergiert ist.

3. Photographische Filmeinheit nach Anspruch 1 oder 2, dadurch gekennzeichnet, daß das Kunststoffmaterial aus Polystyrol besteht.

4. Photographische Filmeinheit nach Anspruch 1, 2 oder 3, dadurch gekennzeichnet, daß das teilchenförmige Material aus $Fe_2O_3$ besteht, das die Lichtundurchlässigkeit des Kerns bewirkt.

5. Photographische Filmeinheit nach Anspruch 4, dadurch gekennzeichnet, daß der Kern (2) Kohlenstoff enthält, der seine Lichtundurchlässigkeit verstärkt.

6. Photographische Filmeinheit nach Anspruch 1, 2 oder 3, dadurch gekennzeichnet, daß das teilchenförmige Material aus $Fe_3O_4$ besteht, das die Lichtundurchlässigkeit des Kerns bewirkt.

## Revendications

1. Groupement de pellicule photographique destiné à être exposé dans un appareil photographique de prise de vues et traité ultérieurement, qui comprend un disque (3) de matériau photosensible vierge qui présente des plages images (4) disposées sur une région annulaire autour d'un axe et qui est apte à être entraîné en rotation suivant cet axe par l'appareil afin de présenter une à une des plages images pour exposition, ce groupement étant caractérisé en ce qu'un noyau opaque (2) contenant un matériau d'enregistrement magnétique particulaire dispersé dans une matière plastique est fixé dans une ouverture centrale du disque (3).

2. Groupement de pellicule photographique conforme à la revendication 1 caractérisé en ce que le matériau particulaire est dispersé dans tout le noyau (2).

3. Groupement de pellicule photographique conforme à la revendication 1 ou 2 caractérisé en ce que la matière plastique est un polystyrène.

4. Groupement de pellicule photographique conforme à la revendication 1, 2 ou 3 caractérisé en ce que le matériau particulaire est du $Fe_2O_3$ qui confère une opacité au noyau.

5. Groupement de pellicule photographique conforme à la revendication 4 caractérisé en ce que le noyau (2) contient du carbone pour conférer une opacité supplémentaire.

6. Groupement de pellicule photographique conforme à la revendication 1, 2 ou 3 caractérisé en ce que le matériau particulaire est du $Fe_3O_4$ qui confère l'opacité au noyau.

0011086

FIG. 1

FIG. 2

COMPUTER

AMP.

FIG. 4

0011086

A MANUFACTURE

AI 9 ASA

2

B

C Photo Finisher

Exposure Conditions

Customer Orders & Prints etc.

F Printer Control

D PHOTOFINISHER

2

E DEVELOPING

G PAPER PROCESSING AND INSPECTION

H SHIPPING

FIG. 3

2

FIG. 5

3

FIG. 6